# EUROPEAN PATENT APPLICATION

(11) **EP 2 911 023 A1**
(43) Date of publication of application: **26.08.2015**
(21) Application number: 13846544.8
(22) Date of filing: 03.10.2013
(51) Int. Cl.: G05B 19/418, G06K 7/10, G06K 17/00, G06Q 50/04

(54) **MOTOR VEHICLE PRODUCTION LINE MANAGEMENT SYSTEM AND MANAGEMENT METHOD**

(30) Priority: 18.10.2012 JP 2012230967
(71) Applicant: Hitachi, Ltd., Tokyo 100-8280 (JP)
(72) Inventor: NUMATA Yuichiro, Tokyo 100-8280 (JP); FUJII Kiyotaka, Tokyo 100-8280 (JP); OGAWA Yoshiyuki, Tokyo 100-8280 (JP)
(74) Representative: MERH-IP Matias Erny Reichl Hoffmann
(86) International application number: PCT/JP2013/076899
(87) International publication number: WO 2014/061455

(57) **Abstract**

A motor vehicle production line management system comprises an assembly step for attaching a component to a vehicle, including a reading apparatus which reads identification information of the component before the component is attached to the vehicle and a performance transmission device which transmits the read identification information of the component; an inspection step of the vehicle, including a reading apparatus which reads identification information of the component attached to the vehicle and is different from the reading apparatus of the assembly step in reading characteristics and a performance comparison device which transmits the read identification information of the component; a vehicle detecting apparatus for transmitting the identification information of the vehicle in each of the assembly step and the inspection step; and a server including a database and a comparison unit, the database storing the received identification information from the assembly step and the identification information of the vehicle in relation to each other, and the comparison unit comparing the identification information stored in the database in relation to the identification information of the vehicle from the inspection step corresponding to the identification information from the inspection step with the received identification information and transmitting agreement/disagreement between the identification information as a result of the comparison to the performance comparison device.

## Description

### FIELD OF THE INVENTION

The present invention relates to management of components attached to a vehicle on a motor vehicle production line.

### BACKGROUND OF THE INVENTION

In motor vehicle production line management systems, plural car models are manufactured on an identical line for the enhancement of efficiency of vehicle production. Components to be attached differ from vehicle to vehicle depending on car models. Components regulated under the "Safety Regulations for Road Vehicles" are commonly designated as critical safety components. The critical safety components, if they have a trouble, can directly affect the human life in motion of a vehicle and require stricter management. To read identification information identifying a critical safety component, it is presently required to bring the identification information attached to the component close to a reading apparatus. Since the identification information of a component is read at close range, the identification information of the component is read and registered before the component is attached to a vehicle in an attaching step in manufacturing process and the identification information cannot be read after the component is attached to a vehicle. Therefore, it is impossible to confirm the agreement between the identification information of an actually attached component and the identification information of a registered component.

In recent years, IC tags are often utilized in work instruction and quality management in motor vehicle production lines. In these cases, a machining command or performance information is read from or written to an IC tag affixed to a vehicle (for example, see Documents 1 and 2).

### DOCUMENTS ON RELATED ARTS

### PATENT DOCUMENTS

Document 1: JP2002-43096
Document 2: JP2010-191769

### DISCLOSURE OF THE INVENTION

### PROBLEMS TO BE SOLVED BY THE INVENTION

When a component, such as an engine, is attached in conventional technologies, a reading apparatus is brought close to a barcode or an IC tag to read the identification information of the component at close range and register the actual performance of the component attachment. As a result, to confirm the identification information of the attached component again after the component is attached to a vehicle in manufacturing process, it is required to detach the component from the vehicle body and visually check the identification number or bring a reading apparatus for identification information close to a recording medium (barcode or IC tag) storing the identification information of the attached component to read the information, causing very troublesome. Consequently, in conventional technologies, the identification information of a component is read only once before the component is attached to a vehicle and the identification information of the attached component is not confirmed again after the attachment.

However, a critical safety component, such as an engine, may be replaced sometimes because of a defect of the component at a repair step after an inspection step in a motor vehicle production line or at a stage of repairing a user's vehicle. Though there is a possibility that a critical safety component, such as an engine, may be replaced as mentioned above, the identification information of the registered component is often revised. Wrong identification information may be registered as actual performance of the component attachment because of misreading by a barcode reader or an IC tag reader. Misreading depends on the reading performance of a barcode reader or an IC tag reader. Especially, misreading is caused by dirt in case of barcodes. Barcode readers and IC tag readers are different from each other in reading characteristics. In situations in which component can be replaced, it is required to confirm an agreement before a vehicle is shipped between the identification information of a component registered in a motor vehicle production line management system and the identification information of an actually attached component.

Once it is found that there is a disagreement of identification information between the actual attachment performance information of a critical safety component, such as an engine, and the identification information of an actually attached component, it is required to confirm the consistency between the performance information and the attached component with stopping the motor vehicle production line and detaching the attached component to visually check the identification number by manpower, for example. This work takes a very long time and, in some cases, prevents the shipping.

### MEANS FOR SOLVING THE PROBLEM

The motor vehicle production line management system of the present invention comprises an assembly step for attaching a component to a vehicle, including a first reading apparatus which reads first identification information of the component before the component is attached to the vehicle and including a performance transmission device which transmits the first identification information of the component read with the first reading apparatus; an inspection step of the vehicle, including a second reading apparatus which reads second identification information of the component attached to the vehicle and is different from the first reading apparatus in reading characteristics and including a performance comparison device which transmits the second identification information of the component read with the second reading apparatus; a vehicle passage detecting and vehicle identification information reading apparatus for detecting the identification information of the vehicle in each of the assembly step and the inspection step and transmitting the detected identification information of the vehicle; and a server including a database and a comparison unit, the database, in response to reception of the first identification information, storing the received first identification information and the identification information of the vehicle from the vehicle passage detecting and vehicle identification information reading apparatus which has detected the vehicle in the assembly step in relation to each other, and the comparison unit, in response to reception of the second identification information, comparing the first identification information stored in the database in relation to the identification information of the vehicle from the vehicle passage detecting and vehicle identification information reading apparatus which has detected the vehicle in the inspection step corresponding to the second identification information with the received second identification information and transmitting agreement/disagreement between the first identification information and the second identification information as a result of the comparison to the performance comparison device.

### ADVANTAGEOUS EFFECTS OF THE INVENTION

According to the present invention, it is possible to ensure the consistency between the registration information before attachment of a component, such as an engine, and the performance information after the attachment on a motor vehicle production line.

### BRIEF DESCRIPTION OF DRAWINGS

Figure 1 illustrates a motor vehicle production line management system;
Figure 2 is a processing flowchart of component performance registration processing;
Figure 3 is a processing flowchart of component performance comparison processing;
Figure 4 shows a data structure of management data stored in a database; and
Figure 5 is a detail drawing of an engine attachment step.

### DESCRIPTION OF EMBODIMENTS

Hereinafter, an embodiment of the present invention will be described with reference to the drawings.

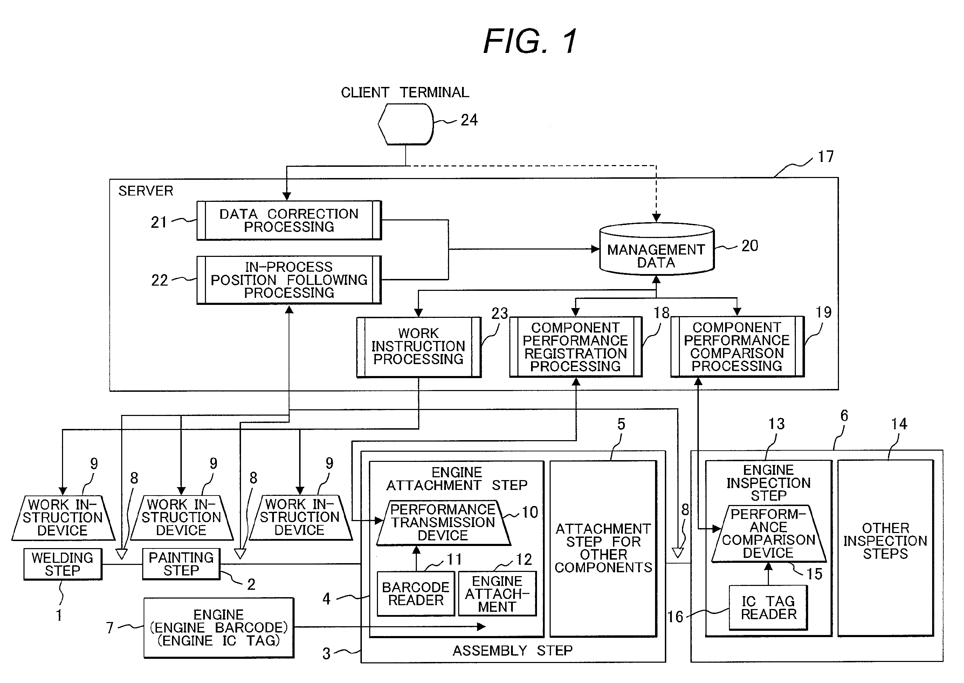

Figure 1 illustrates a motor vehicle production line management system in this embodiment. Figure 1 specifically shows the overview of attachment performance check for critical safety components utilizing an IC tag.

The motor vehicle production line includes plural production line work steps including a welding step 1, a painting step 2, an assembly step 3, and an inspection step 6. A vehicle passage detecting and vehicle identification information reading apparatuses 8, such as a phototube sensor or an ID reading apparatus, are installed in and between the steps to detect the passage of vehicles, although these reading apparatuses are simply depicted to avoid complexity in Figure 1. The vehicle passage detecting and vehicle identification information reading apparatuses 8 are is provided so that when a position (for example, the engine attachment step 4 of the assembly step 3) on the motor vehicle production line is specified, a vehicle in the specified position can be identified. The server 17 that manages the motor vehicle production line manages the in-process position of each vehicle and the performance information of each step in cooperation with the vehicle passage detecting and vehicle identification information reading apparatuses 8. The server 17 further compares, registers, and updates information about each vehicle on the motor vehicle production line.

Each vehicle has vehicle identification information consistent throughout all the steps. Each vehicle is produced with a recording medium attached to the vehicle, such as a barcode or RFID, storing the vehicle identification information. Even at a stage at which a user owns the vehicle, the correspondence between the vehicle identification information and the vehicle is maintained.

When the passage of a vehicle is detected by a vehicle passage detecting and vehicle identification information reading apparatus 8, the information is transmitted to an in-process position following processing unit 22 of the server 17. The in-process position following processing unit 22 determines the identification information of the passed vehicle and the step to which the vehicle was passed from the vehicle detection data from the vehicle passage detecting and vehicle identification information reading apparatus 8. The in-process position following processing unit 22 stores the determined information in the database 20 as management data and updates the database 20. In correspondence with the passage detection position of the vehicle, a work instruction processing unit 23 transmits the work instruction data to the work instruction device 9 at the step to which the vehicle was passed. The work instruction information is printed on paper or displayed by the work instruction device 9. For example, the work instruction data transmitted to the work instruction device 9 in the engine attachment step 4 by the work instruction processing unit 23 contains the information of the engine to be attached (the identification information of the engine).

A vehicle on the motor vehicle production line is not always at any step and can be in a position to wait for entry to the next step. A vehicle in a waiting position is detected by the vehicle passage detecting and vehicle identification information reading apparatus 8 placed at the outlet of some step and is not detected by the vehicle passage detecting and vehicle identification information reading apparatus 8 placed at the inlet of the next step. As a result, the in-process position following processing unit 22 recognizes the position of the vehicle. The work instruction processing unit 23 does not operate for the vehicle at waiting positions. The motor vehicle production line has diversions and confluences to absorb differences in work time in steps and to enhance the production efficiency. To identify the positions of vehicles passing through the diversions and confluences, a vehicle passage detecting and vehicle identification information reading apparatus 8 is provided at positions immediately after and, if necessary, immediately before the diversions and confluences.

A line 7 for engines is provided at the attachment step 4 for engines as a critical safety component in the assembly step. A barcode in which engine information (the identification information of each engine) is printed and an IC tag in which the engine information is registered are attached to these engines. Before an engine is actually attached, the barcode of the engine information of the engine to be attached is read by a barcode reader 11 connected to a performance transmission device 10. The read information is sent to a component performance registration processing unit 18 for the vehicle to which the engine is to be attached. The component performance registration processing unit 18 confirms that the sent information is identical with the information of the engine to be attached transmitted by the work instruction processing unit 23. The processing unit 18 thereafter stores the result read by the barcode reader 11 as engine registration information (attached component performance information) in the database 20. Subsequently, the engine is attached to the vehicle in an engine attachment step 12. When the information of the engine to be attached is different from the engine registration information which is the result read by the barcode reader 11, the work instruction processing unit 23 transmits a warning to a work instruction device 9. When the result read by the barcode reader 11 is caused by misreading, the work instruction device 9 in the engine attachment step 12 receives the warning. Even though the work instruction device 9 receives the warning, the engine attachment work is advanced if a worker visually confirms that the engine is an engine to be attached. In this case, the worker corrects the attached component performance information stored in the database 20 from a client terminal 24 connected to the server 17. If the worker forgets to make a correction entry or makes an erroneous entry at this stage, the attached component performance information stored in the database 20 remains erroneous.

The assembly step 3 includes attachment step 5 for plural components other than engines, such as tires and transmissions.

Engine information (identification information as a component) by a barcode attached to one vehicle and engine information (identification information as a component) stored in an IC tag are identical with each other. A printed barcode is read with a barcode reader and the read contents (engine information) are written to an IC tag with an IC tag writer in advance. Alternatively, contents (engine information) written to an IC tag are read with an IC tag reader and the read contents (engine information) are printed as a barcode. Barcodes and IC tags, which contain identical identification information as mentioned above, are constantly managed in correspondence with each other at the manufacturing steps for each component. In this embodiment, barcodes and IC tags will be taken as an example of storage media different in reading characteristics to store the identification information of the components. However, any combination can be used as long as the combination is composed of pairs of storage media including paper, different in reading characteristics, and reading apparatuses for the media. For example, component identification information inscribed on the component itself (forming on the surface) may be read by a worker and the worker may input the component identification information read from a simple input apparatus, or component identification information written to a magnetic device used for magnetic cards may be read with a reading apparatus.

At the inspection step 6 of vehicles, absence of failure to attach a component at the assembly step 3 and flaws is confirmed by appearance. At an engine inspection step 13, an IC tag affixed to an engine is read with an IC tag reader 16 connected to a performance comparison device 15 with the engine attached to the vehicle. The result of reading is sent to a component performance comparison processing 19. The component performance comparison processing 19 confirms the agreement between the engine registration information registered by the component performance registration processing unit 18 at the engine attachment step 4 of the assembly step 3 and the information read by the IC tag with an IC tag reader 16. The inspection step 6 also includes other inspection steps 14 in addition to the engine inspection step 13.

The client terminal 24 in Figure 1 is capable of referring to and revising the various performance data stored in the database 20. The client terminal 24 refers to the data stored in the database 20 directly. The client terminal 24 revises the data stored in the database 20 through a data correction processing unit 21.

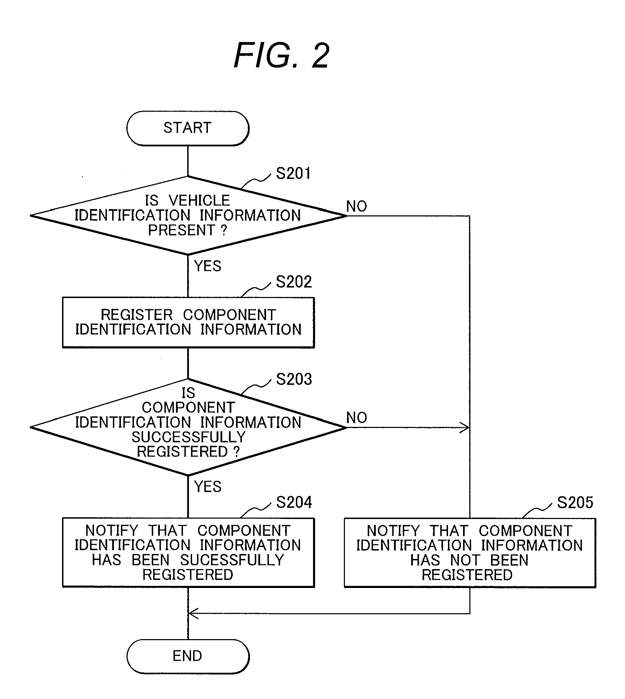

Figure 2 is a processing flowchart of the component performance registration processing 18. Figure 2 shows the details of the component performance registration processing unit 18, for example, to which the result of reading a barcode of the engine information of an engine to be attached is sent from the performance transmission device 10 at the engine attachment step 4 of the assembly step 3 in Figure 1. The component performance registration processing unit 18 performs transaction processing. Therefore, even when the attached component performance information of components, such as an engine to be attached, is sent from plural performance transmission devices 10, the order of the component registration is not changed.

At the engine attachment step 4, the identification number recorded in a barcode attached to an engine is read with the barcode reader 11 and transmitted to the server 17. Then, the component performance registration processing 18 is started. The component performance registration processing 18 checks whether or not vehicle data containing the identification information of a vehicle to which an engine is to be attached is present in the database 20 and checks the agreement between the identification information of the component to be attached and the identification information of the read component (S201). If a vehicle to which an engine is to be attached is present and both pieces of the identification information agree with each other, the read identification information of the component (engine) is registered (S202). It is determined whether or not the registration processing has been successfully completed (S203). If the identification information is successfully registered, a message on the success of component attachment performance registration is sent to the performance transmission device 10 (S204). If the registration ends in failure (for example, in a case of the absence of the vehicle identification information, disagreement of the identification information of the component, or erroneous access to the database), a message on the failure of component attachment performance registration is sent to the performance transmission device 10 and the work instruction processing unit 23 transmits a warning to the work instruction device 9 (S205).

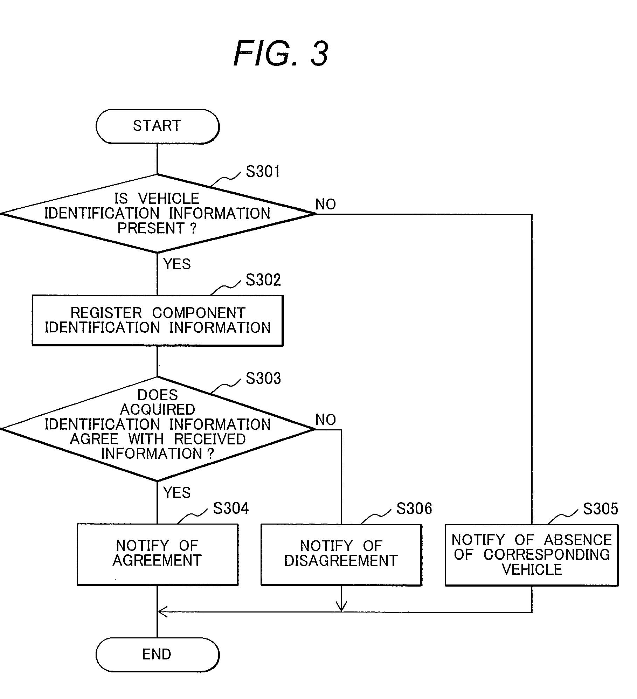

Figure 3 is a processing flowchart of the component performance comparison processing 19. The component performance comparison processing 19 responds to a notification of the result of reading an IC tag affixed to an engine from the performance comparison device 15 at the engine inspection step 13 in Figure 1 and returns the result of agreement or disagreement with the identification information of the component registered by the component performance registration processing 18 to the performance comparison device 15.

At the engine inspection step 13, after the vehicle identification information in a barcode read by a vehicle identification information reading apparatus (8) and the identification information of the component read from an IC tag attached to an engine using the IC tag reader 16 are transmitted from the performance comparison device 15 to the server 17, the component performance comparison processing 19 is then started. The component performance comparison processing 19 checks whether or not the read vehicle identification information is present in the database 20 (S301). If the vehicle identification information is not present, a message on the absence of a corresponding vehicle is sent to the performance comparison device 15 (S305). If the vehicle identification information is present, engine attachment performance data containing the identification information of an engine already stored in the database 20 is acquired for the identification information of the corresponding vehicle (S302). Subsequently, the already registered engine identification information is compared with the identification information of the component transmitted from the performance comparison device 15 (S303). If the identification information of the component (engine) registered in the database 20 agrees with the identification information of the component (engine) transmitted from the performance comparison device 15, a message on data agreement is sent to the performance comparison device 15 (S304). If both pieces of the identification information disagree with each other, a message on data disagreement is sent to the performance comparison device 15 (S306). A disagreement is caused when either the identification information of a component (engine) registered in the database 20 or the identification information of a component (engine) transmitted from the performance comparison device 15 is erroneous. There is also a case where the identification information of a component (engine) registered in the database 20 and the identification information of a component (engine) transmitted from the performance comparison device 15 are both erroneous and agree with each other. However, the probability of the occurrence of this case is negligibly small in operation.

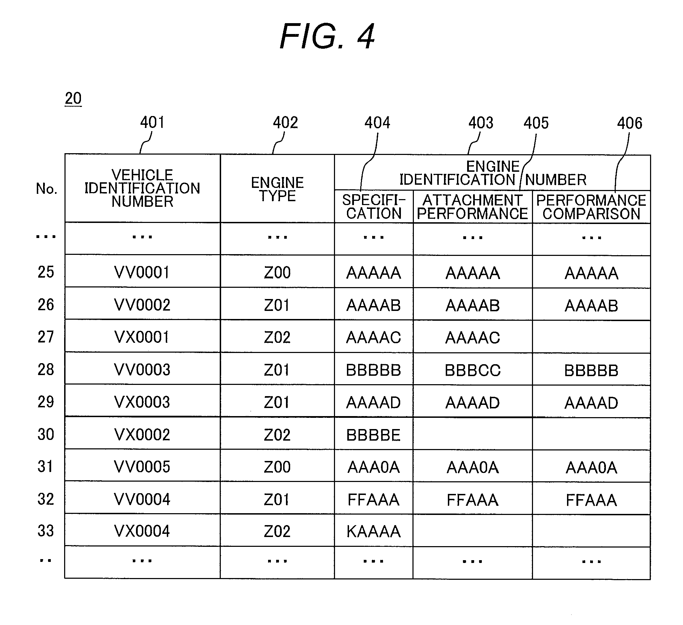

Figure 4 shows the data structure of management data which is the identification information of components, stored in the database 20. The management data includes fields for vehicle identification number 401, engine type 402, and engine identification number 403. The field for engine identification number 403 includes a field for specification 404 which is the identification number of an engine to be attached to a vehicle of vehicle identification number 401, a field for attachment performance 405 which is an engine identification number notified as attachment performance at the engine attachment step 4, and a field for performance comparison 406 which is an engine identification number notified for performance comparison at the engine inspection step 13. "No." in the margin of the table in Figure 4 is attached for the following description.

The data of No.25, No.26, No.29, No.31, and No.32 indicate that an engine of an engine identification number to be attached to a vehicle of a vehicle identification number 401 has been attached at the engine attachment step 4 and the performance comparison of them has been conducted at the engine inspection step 13. The data of No.27 indicates that an engine of an engine identification number to be attached to a vehicle of a vehicle identification number 401 has been attached at the engine attachment step 4 and an engine identification number for the performance comparison of this vehicle has not been notified yet from the engine inspection step 13. The data of No.28 indicates that an engine identification number different from an engine of an engine identification number to be attached to a vehicle of a vehicle identification number 401 is notified from the engine attachment step 4 and the result of the performance comparison shows a disagreement at the engine inspection step 13. The data of No.30 and No.33 indicate that a vehicle of a vehicle identification number 401 has not reached the engine attachment step 4 or an engine identification number has not been notified as attachment performance from the engine attachment step 4.

The management data, which is stored in the database 20, can be referred to and revised from the client terminal 24 in Figure 1. When it is determined at the engine inspection step 13 in Figure 1 that the result of comparison of engine identification information is a disagreement, a user of the motor vehicle production line management system can investigate any causes of the disagreement based on the management data in Figure 4.

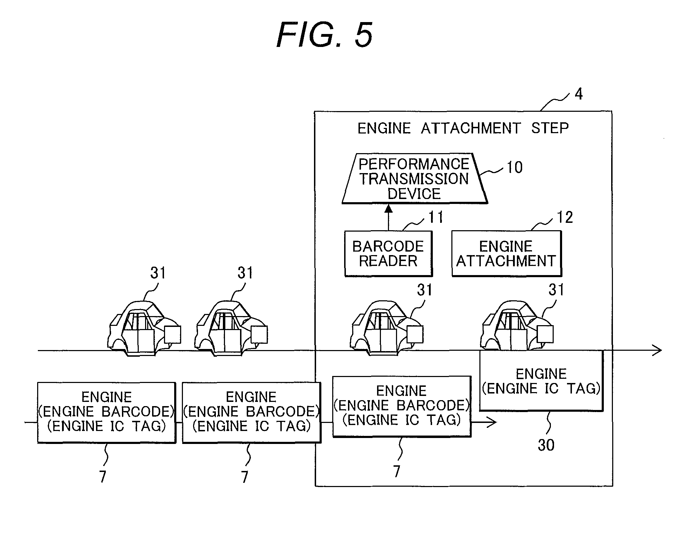

Figure 5 is a detail drawing of the engine attachment step 4. In the engine attachment step 4, there are a line on which vehicles 31 are conveyed and a line on which engines (with a barcode and an IC tag attached to) 7 are conveyed. The engine barcode (identification information of an engine as a component) is read with the barcode reader 11. An instruction containing a printed engine barcode affixed to each engine is stripped off from the engine by a worker. Engine barcodes may be printed on a sheet of paper different from the instruction and attached, but a sheet of paper with an engine barcode printed is stripped off to avoid a trouble in the vehicle. Meanwhile, IC tags are firmly attached to prevent the separation of the IC tags from the component until the inspection step 6 or a stage at which a user owns the vehicle. The IC tags are very small and, therefore, will not lead to a trouble in the vehicle. The component performance registration processing 18 is invoked from a vehicle and the engine information by reading the barcode. When the result can be registered as performance registration, an engine attachment work is conducted. In the engine attachment, an engine (with an IC tag attached to) 30 is attached to a vehicle 31.

According to this embodiment, it is possible to ensure consistency between registration information of a component, such as an engine, before attachment and performance information after attachment on a motor vehicle production line.

### EXPLANATION OF REFERENCE CHARACTERS

1... welding step
2...painting step
3...assembly step
4...engine attachment step
5... assembly step for others
6...inspection step
7... engine (with barcode and IC tag attached to)
8...vehicle passage detecting and vehicle identification information reading apparatus
9...work instruction device
10...performance transmission device
11...barcode reader
12...engine attachment step
13...engine inspection step
14...other inspection steps
15...performance comparison device
16...IC tag reader
17...server
18...component performance registration processing unit
19...component performance comparison processing unit
20...database
21...data correction processing unit
22...in-process position following processing unit
23...work instruction processing unit
24...client terminal
30...engine (with IC tag attached to)
31...vehicle

## Claims

1. A motor vehicle production line management system comprising:
an assembly step for attaching a component to a vehicle, including a first reading apparatus which reads first identification information of the component before the component is attached to the vehicle and including a performance transmission device which transmits the first identification information of the component read with the first reading apparatus;
an inspection step of the vehicle, including a second reading apparatus which reads second identification information of the component attached to the vehicle and is different from the first reading apparatus in reading characteristics and including a performance comparison device which transmits the second identification information of the component read with the second reading apparatus;
a vehicle passage detecting and vehicle identification information reading apparatus for detecting the identification information of the vehicle in each of the assembly step and the inspection step and transmitting the detected identification information of the vehicle; and
a server including a database and a comparison unit, the database, in response to reception of the first identification information, storing the received first identification information and the identification information of the vehicle from the vehicle passage detecting and vehicle identification information reading apparatus which has detected the vehicle in the assembly step in relation to each other, and the comparison unit, in response to reception of the second identification information, comparing the first identification information stored in the database in relation to the identification information of the vehicle from the vehicle passage detecting and vehicle identification information reading apparatus which has detected the vehicle in the inspection step corresponding to the second identification information with the received second identification information and transmitting agreement/disagreement between the first identification information and the second identification information as a result of the comparison to the performance comparison device.

2. The motor vehicle production line management system according to claim 1,
wherein the first reading apparatus is a barcode reader and the second reading apparatus is an IC tag reader.

3. A motor vehicle production line management method comprising the steps of:
reading first identification information of a component by a first reading apparatus in an assembly step of a vehicle before the component is attached to the vehicle;
transmitting the first identification information of the component read with the first reading apparatus by a performance transmission device in the assembly step;
reading second identification information of the component by a second reading apparatus in an inspection step of the vehicle, the second reading apparatus being different from the first reading apparatus in reading characteristics;
transmitting the second identification information of the component read with the second reading apparatus by a performance comparison device in the inspection step;
detecting the identification information of the vehicle and transmitting the detected identification information of the vehicle by a vehicle passage detecting and vehicle identification information reading apparatus in each of the assembly step and the inspection step; and
comparing information and transmitting a result of the comparison,
wherein, in the comparing information and transmitting a result of the comparison step, a server is connected to a database for, in response to reception of the first identification information, storing the received first identification information in relation to the identification information of the vehicle from the vehicle passage detecting and vehicle identification information reading apparatus which has detected the vehicle in the assembly step; the server compares, in response to reception of the second identification information, the first identification information stored in the database in relation to the identification information of the vehicle from the vehicle passage detecting and vehicle identification information reading apparatus which has detected the vehicle in the inspection step corresponding to the second identification information with the received second identification information; and the server transmits agreement/disagreement between the first identification information and the second identification information as the result of the comparison to the performance comparison device.

4. The motor vehicle production line management method according to claim 3,
wherein the first reading apparatus is a barcode reader and the second reading apparatus is an IC tag reader.
